# EUROPEAN PATENT SPECIFICATION

(11) **EP 2 999 990 B1**
(45) Date of publication and mention of the grant of the patent: **07.06.2023**
(21) Application number: 14800821.2
(22) Date of filing: 22.05.2014
(51) Int. Cl.: G02C 5/08

(54) **UNIVERSAL EYEWEAR**
UNIVERSELLE BRILLE
LUNETTES UNIVERSELLES

(30) Priority: 22.05.2013 US 201361826127 P
(43) Date of publication of application: 30.03.2016
(73) Proprietor: Thinoptics Inc., Palo Alto, CA 94301-3127 (US)
(72) Inventor: SHALON, Tadmor, Palo Alto, CA 94301-3127 (US)
(74) Representative: J A Kemp LLP
(86) International application number: PCT/US2014/039167
(87) International publication number: WO 2014/190166

(56) References cited:
- EP-B1- 2 016 457
- EP-B1- 2 016 457
- WO-A1-2010/086650
- WO-A2-2012/069980
- WO-A2-2012/069980
- DE-A1- 4 407 313
- DE-A1- 4 407 313
- JP-A- H10 161 067
- US-A- 1 017 579
- US-A- 2 083 999
- US-A- 2 234 729
- US-A- 2 234 729
- US-A- 4 924 245
- US-A- 6 158 860
- US-A1- 2012 206 690
- US-A1- 2012 218 506

## Description

### BACKGROUND

The present invention relates to eyewear and in particular to Pince-Nez eyeglasses (i.e., two lens eyewear lacking temple pieces) that are comfortable, stable and have universal fit while still having full sized optics. The eyeglasses of this invention are also thin, light and easily stored.

There are over 40 million people in the US that use reading glasses known as readers. Current readers typically purchased in a drug store or other mass merchandisers are designed to fit most people by using the nose as a resting place. Since nose width, angle and shape vary considerably among users, standard readers achieve their stability via the temple pieces placed above and behind the user's ears.

Users wear readers at a different place down their nose in order to allow them to look over the lenses of the readers and to change the distance from the lens to the eye to adjust their effective power. The temple pieces of standard readers are usually long enough to accommodate these different positions without loss of stability of the eyeglasses on the user's face.

Most Pince-Nez eyeglasses apply a significant clamping force on the nose in order to stabilize the lenses on the wearer's face. To provide a universal fit, Pince-Nez eyeglasses should accommodate noses of varying sizes and shapes at varying wearing locations while maintaining stability without user discomfort. Many Pince-Nez eyeglass designs fail to meet this standard, however. For example, while attaching Pince-Nez eyeglasses on the pliable tissues over the nostrils might help attach the eyeglasses to any size nose, most users would find this attachment location to be uncomfortable because it restricts breathing, and the glasses would be too far away from the eyes.

Another common problem with readers is their availability when needed. While the temple pieces of standard readers can be folded toward the lenses to reduce the storage size of the eyeglasses, the temple pieces take up storage space, and the overall volume of the storage configuration of the readers may limit their accessibility. Because Pince-Nez eyeglasses do not have temple pieces, they present new opportunities for storage and accessibility.

WO 2012/069980 discloses an eyewear which includes lenses interconnected via a lens bridge and a nose clamp connected to the lens bridge or lenses. The nose clamp includes nose pads which are mountable onto a nose of a user, wherein the nose pads are configured for accommodating noses of varying width without substantially affecting a distance between the lenses or their orientation on the face of the user.

### SUMMARY OF THE DISCLOSURE

The invention is defined in claim 1. Further aspects and preferred embodiments are defined in the dependent claims. Any aspects, embodiments and examples of the present disclosure which do not fall under the scope of the appended claims do not form part of the invention and are merely provided for illustrative purposes.

### BRIEF DESCRIPTION OF THE DRAWINGS

The novel features of the invention are set forth with particularity in the claims that follow. A better understanding of the features and advantages of the present invention will be obtained by reference to the following detailed description that sets forth illustrative embodiments, in which the principles of the invention are utilized, and the accompanying drawings of which:
Figure 1A is a perspective view of Pince-Nez eyeglasses according to one embodiment of the invention.
Figure 1B is a cross-sectional view taken along the line B-B shown in Figure 1A.
Figure 2 plots the distance between the tops of the nose pads versus the distance between the bottoms of the nose pads for a variety of users wearing the eyeglasses of Figures 1A and 1B.
Figure 3 compares the nose pinch force provided by a variety of Pince-Nez eyeglasses.
Figure 4 is a perspective view of an embodiment of eyeglasses and case according to another embodiment of the invention in which the eyeglasses are stored flat.
Figure 5 is an elevational view of an embodiment of eyeglasses and case according to another embodiment of the invention in which the eyeglasses are stored in a folded configuration.
Figure 6 is a perspective view of an embodiment of eyeglasses and case according to yet another embodiment of the invention in which the eyeglasses are stored in a folded configuration.
Figure 7 is a perspective view of the embodiment of Figure 6 with the locking band in a locked position.
Figure 8 is sectional view of the case of Figure 4 without the eyeglasses.
Figure 9 is a partial perspective view of yet another embodiment of the eyeglasses of this invention.
Figure 10 is a perspective view of another embodiment of the eyeglasses not being part of the invention.
Figure 11 is a perspective view of yet another case for use with eyeglasses according to this invention.

### DETAILED DESCRIPTION

Prior art Pince-Nez eyewear (see wwwdotendotwikipediadotorg/wiki/Pince-nez) typically utilize nose pads that are directly or indirectly attached to the lenses or lens frame. As a result, any changes to the distance between nose pads affect the distance between the lenses and their angular orientation and position with respect to the eyes, which can induce optical prism, introduce error in the optical cylinder axis or affect the lens aesthetics. The varying distance between the nose pads of prior art Pince-Nez eyewear further changes the nose clamp spring force, resulting in an inconsistent pinch force for different users, an unstable fit for some and discomfort for others. The large pinch force can also lead to tissue ischemia, adding to user discomfort.

The present invention provides eyeglasses that are comfortable and stable on noses of nearly all sizes and shapes. Typical reading glasses weigh over 20 g, even foldable compact versions (e.g. Micro Vision) with smaller lenses weigh over 14 g. It will be appreciated that in a Pince-Nez design, the weight of the eyewear is important for both stability on the nose and comfort. Heavier eyewear without ear pieces requires more clamping force to maintain stability on the nose because of the increased weight and the increased mechanical moment which causes instability when the user moves their head up and down or from side to side. Since the clamping force translates to pressure exerted by the nose pads on the tissue, a larger clamping force can lead to user discomfort, pain and in extreme cases, tissue ischemia. Thus, in some embodiments, the eyeglasses reduce the pinching pressure required to maintain a stable position by reducing the mass of the full size optics and hence reducing inertia caused by head movement and gravitational pull and increase the area of the thin nose pads to distribute the force and hence reduce the pressure further.

In addition, some embodiments of the eyewear of this invention optionally increase the friction between the eyewear and the nose skin by utilizing novel nose pad materials. Such eyewear further reduces the clamping force required for stability while reducing the force causing slippage off the nose.

Some embodiments of the Pince-Nez eyewear of this invention provide the nose pinch force with a super elastic bridge spring whose force does not change significantly as a function of nose width. For example, the eyewear may employ thin super elastic alloy wire made from Nitinol to interconnect the lenses (referred to herein as a lens bridge). A superelastic bridge allows repeated transformation from a worn position to a folded position for storage while exerting repeatable, controlled and nearly constant low pinch force for varying bridge deformation cause by varying width noses during wear. This feature combined with use of thin molded polycarbonate lenses results in Pince-Nez reading eyewear a large viewing zone for reading comfortably without lens distortion and without the usability compromises often inflicted by compact reading glasses.

Some embodiments of the Pince-Nez eyewear of this invention provide elongated thin nose pads or folding nose pads whose specific separation distance allows the top of the pad to engage the nose via the force created by bridge spring while the bottom of the nose pad can flex or pivot to accommodate different nose angles and thus prevent the glasses from tipping forward.

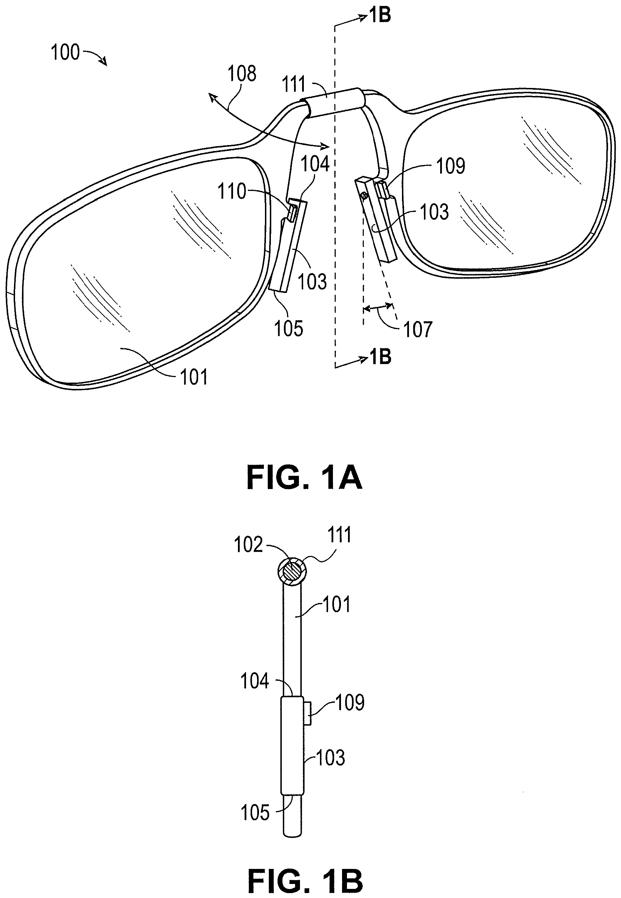

One embodiment of the eyeglasses of this invention is shown in Figure 1. The eyeglasses 100 include full sized lenses 101 over molded on an nitinol wire bridge 102 (NDC, Fremont CA) with diameter of 0.010" to 0.030" (e.g., 0.020") covered with an elastomer 111. The lenses may be clear optical lenses for reading glasses or tinted sunglass lenses.

In the embodiment shown in Figures 1A and 1B, the lenses 101 are molded polycarbonate optical lenses less than 3 mm thick weighing less than 5 grams for 2.5 diopter full sized reading glasses with lens optical area of over 9 cm². For lower optical powers or smaller optical area, the lens thickness and reader's weight can be reduced even further. For sunglasses or 3D glasses with no optical power the lenses can be less than 2 mm thick for any optical zone.

The lenses 101 are attached to the super elastic bridge 102, as shown. In alternative embodiments, the lenses can be attached to a frame, with the bridge forming part of the frame or extending between two frame sections.

In the illustrated embodiment, the eyeglasses have nose pads 103 that are no wider than the lens thickness. In this embodiment, the nose pads 103 are 13 mm long (+/- 4 mm). Nose pads 103 are attached to the lenses 101 (or, if there is an optional frame, to the frame) at their upper ends 104 and are free at their lower ends 105 to form cantilevers extending downward. In one embodiment, there is a 12 mm (+/- 3 mm) separation between the tops 104 of the nose pads 103, and the nose pads 103 extend downward at an angle 107 of 18° +/- 4° from the vertical in their rest positions.

In some embodiments, the nose pads are formed from a flexible material, such as 0.005-0.020" (e.g., 0.010") inch thick polycarbonate. In such embodiments, the nose pad material, shape and cantilever connection permit the nose pads 103 to bend with a spring constant that is less than the spring constant of the bridge 102. The nose pads 103 can therefore flex to accommodate the nose geometry while permitting the entire nose pad to maintain contact with the nose.

In some embodiments, a 10 mm long super elastic bridge 102 exerts a pinch force measured at the tops 104 of the nose pads 103 of less than 10 g on a narrow nose width of 12 mm, and less than 50 g (0.05 N) on a large nose width of 19 mm (all measurements +/- 20%), as it flexes through angle 108 to accommodate various width noses. The 13.5 mm long nose pads 103 are 2 mm wide providing a total area of 0.24 cm² and thus average pressure well less than 150 g/cm².

The nose pads 103 may have an optional friction material (e.g., laminated onto an elastic member, such as the polycarbonate described above) to further increase the stability of the eyeglasses on the nose by minimizing slippage force due to the component of the pinch force along the surface of the skin and rotation moment due to the eyeglasses' center of mass. The friction can be created by low durometer elastomers such as 3M grip tape (GM613, 3M MN, ASTM 1894 coefficient of friction measured against the same material of less than 3.5), silicone, open cell polyurethane, or micro texture sufficient to grip the skin but not to cause discomfort such as textured polymer (polycarbonate embossed with micro machined or micro molded texture) or micro grit impregnated surface (60-400 grit).

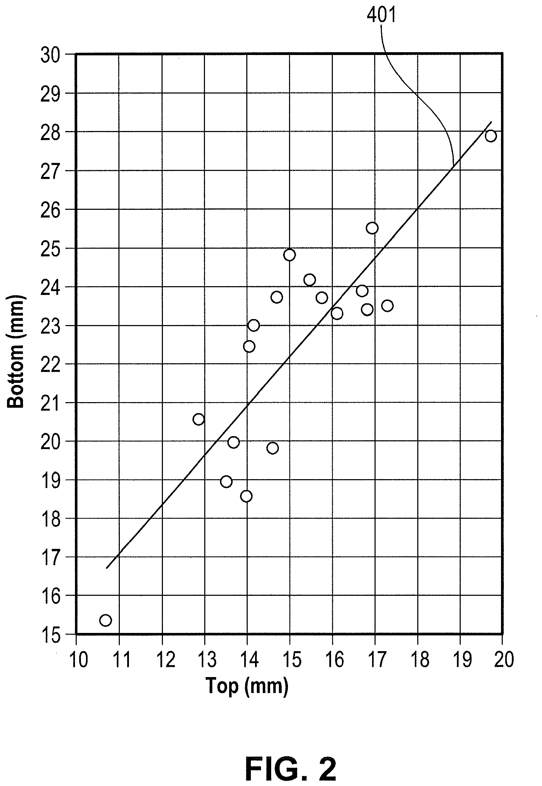

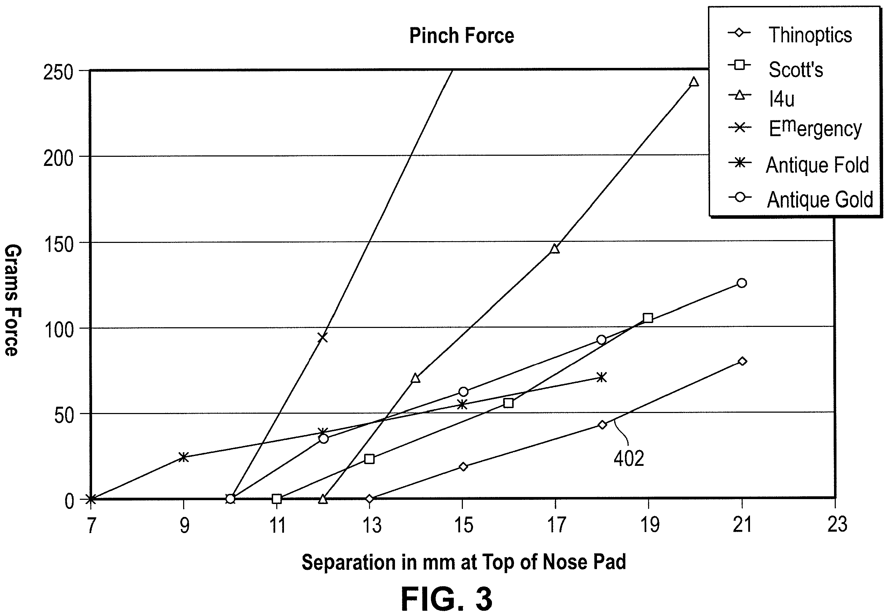

Test data comparing various Pince-Nez eyeglass designs are shown in Figures 2 and 3. Figure 2 plots the distance (as determined by optical measurements) between the tops 104 of the nose pad 103 versus the distance between the bottoms 105 of the nose pads 103 for a variety of users (having a variety of nose sizes and shapes) each wearing the eyeglasses embodiment shown in Figures 1A and 1B. The average top distance was 16.1mm (STD 2.4 mm) with a range of 10.6-19.8 mm and a bottom distance of 23.9 mm (STD 3.1) with a range of 15.4-27.9 mm. As can be appreciated from the linear regression line 401, no one line can be drawn so that all the users would experience proper fit. These measurements were made with the test frame positioned on the appropriate location on the nose bridge; in practice, users vary the location of the eyeglasses on their nose based on the task which adds further variability to the data. As observed in many fit studies, if the bottoms of the nose pads contact the nose while the top pads do not due to the angle and separation, the bottom contact point becomes a pivot point and the glasses easily tip over and fall off the face when the user tilts their head downward to read a tablet or menu. If the top of the nose pads contacts the nose, it becomes the pivot point and the glasses tip over making them no longer perpendicular to the visual axis compromising their usefulness.

Figure 3 compares the nose pinch force (measured at the top of the nosepads) provided by a variety of Pince-Nez eyeglasses. The embodiment shown by Figures 1A and 1B is represented by line 402. As can be seen, the eyeglasses of this invention provide lower pinch forces than the other eyeglasses tested across a range of nose sizes.

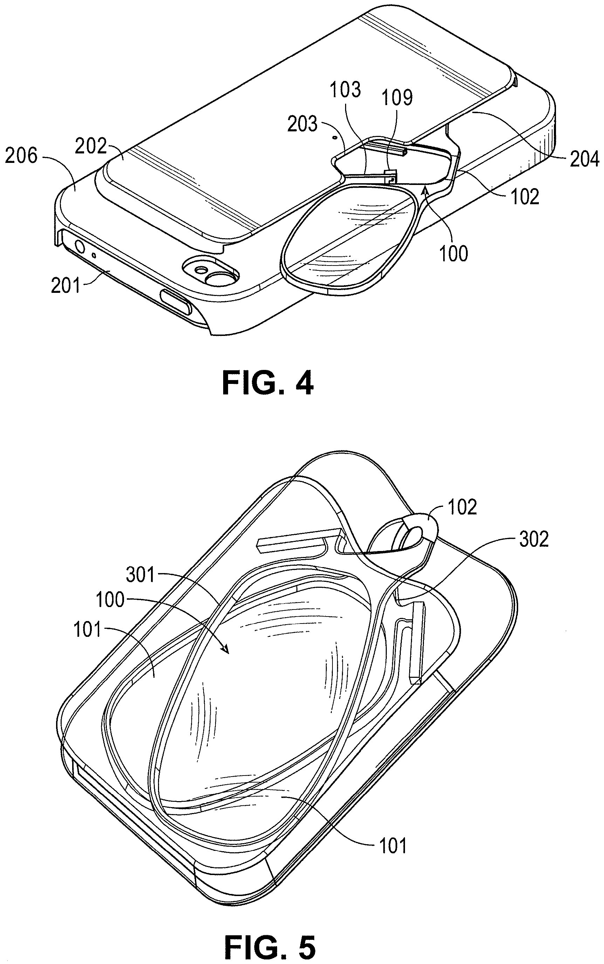

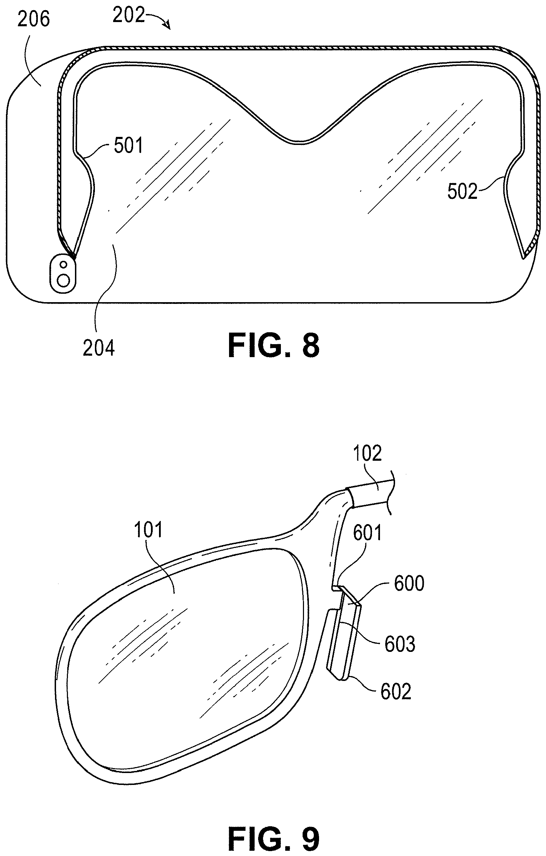

In some embodiments, the eyeglasses are designed to fit in compact storage cases, as discussed in more detail below. For example, the embodiment shown in Figures 1A and 1B may be stored flat in a case 202 extending from a housing 206 designed to be attached to the back of a cell phone 201, as shown in Figure 4. Case 202 has an opening 204 at its top into which the eyeglasses 100 may be inserted. In some embodiments, the eyeglasses 100 are slightly longer than the case 202, and the eyeglasses are therefore bent at the bridge 102 during insertion. In such embodiments, the spring action of the bridge 102 may help retain the eyeglasses in the case. Optional retention features, such as surfaces 501 and 502, may be provided inside the case to hold the eyeglasses within the case, as shown in the cut-away view of Figure 8. In this optional embodiment, the eyeglasses bend at bridge 102 as they are inserted through opening 204 into case 202, then unbend slightly as the lenses pass surfaces 501 and 502. Likewise, to remove the eyeglasses from case 202, the eyeglasses bend at bridge 102 when the lenses move toward each other as the eyeglasses are pulled through opening 204.

An optional cut-away portion 203 may leave the bridge 102 exposed after insertion so that the eyeglasses may be easily extracted from the case. In some embodiments, protruding portions of the eyeglasses (such as, e.g., features 109 and 110 shown in Figures 1A and 1B) may provide a friction fit between the eyeglasses 100 and the inside of case 202. In some embodiments an internal storage volume of the case 202 is less than 14 cm³ for a full 40 mm wide optical zone 2.5 diopter readers stored flat as shown in Figure 4, and the case 202 is less than 4 mm thick.

Figures 5-7 show embodiments of Pince-Nez eyeglass cases in which the eyeglasses are folded for storage. In Figure 5, the eyeglasses 100 are bent at the bridge 102 to place one lens 101 over the other lens 101. Eyeglasses 100 may be inserted through an opening 302 on one end of the case 301. The spring force of the superelastic bridge 102 and the friction fit between the eyeglasses and the interior of the case 301 maintain the position of eyeglasses 100 within case 301. Bridge 102 extends through opening 302 as shown to provide structure to grab for removal of eyeglasses 100 from case 301. In this embodiment, the case 301 may be only 9 mm thick or less.

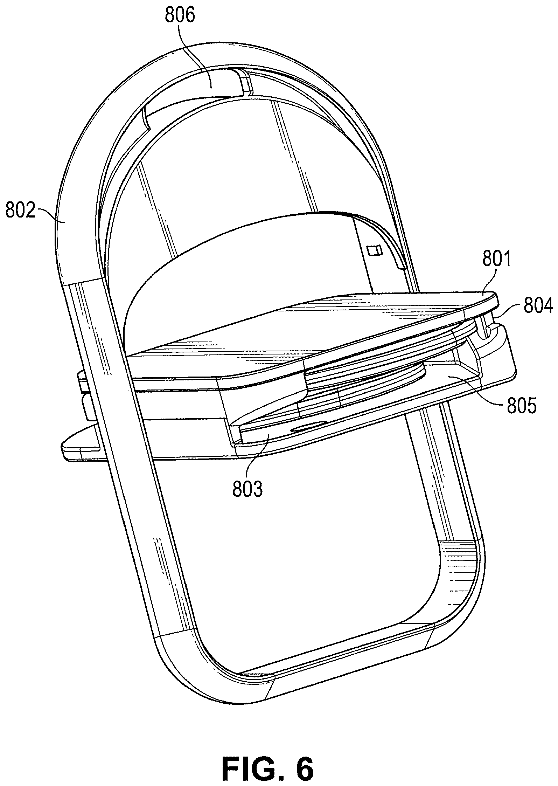

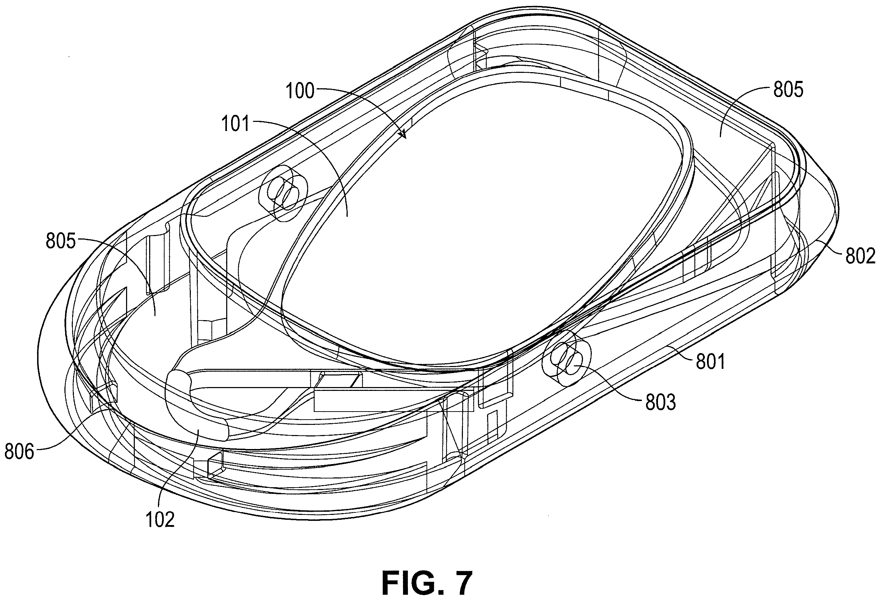

In the embodiments of Figures 6 and 7, eyeglasses 100 may be inserted through an opening 804 for storage within an eyeglass case 801. A locking band 802 rotates around pivot 803 to open the case 801 (as shown in Figure 6) or close it (as shown in Figure 7). Bridge 102 may be inserted first, as shown, and a pair of optional offset guides 803 and 804 help move the one lens 101 over the other lens 101 as the eyeglasses are advanced into case 801. An optional keychain hook 806 may be provided for attachment of the case to a keychain or other holder. The expanding force of superelastic bridge 102 causes the eyeglasses to move against the internal surfaces of the case and helps retain the eyeglasses in the case.

An alternative embodiment of the eyeglasses is shown in Figure 9. In this embodiment, the nose pads 600 are wider than the thickness of the lens 101. The nose pads therefore are designed to fold for storage. For eyeglasses intended to be stored flat, the nose pads must fold to a thickness equal to or less than the thickness of the lenses. For eyeglasses intended to be stored in a folded configuration, the nose pads must fold to a thickness equal to or less than the combined thicknesses of the two lenses.

For example, as shown in Figure 9, the nose pad 600 is formed from a laminate 602 made from friction enhancing material and polycarbonate (0.01" thick) and is attached to the bridge 601 at the top point. Nose pad 600 offers the same spring action described above (i.e., it has a spring constant less than the spring constant of bridge 102) but distributes the pinch force over a larger area. When stored, the nose pad folds along line 603 to become flat.

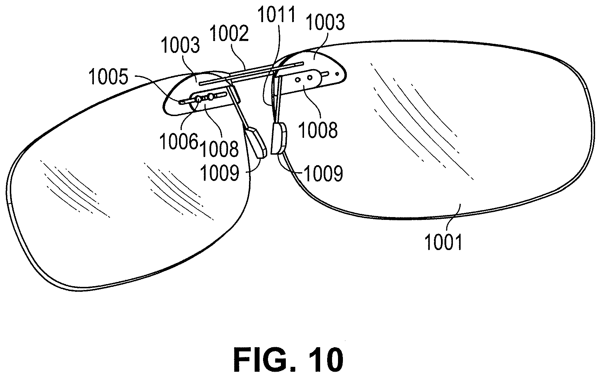

Yet another configuration not being part of the invention is shown in Figure 10. Eyeglasses 1000 have lenses 1001 connected by a superelastic bridge 1002. Nose pads 1009 with friction material facing the nose are connected to the lenses 1001 by nose pad carriers 1008 and super elastic torsion members such as nitinol wires 1011 (0.02" diameter or less) and fold into the plane of the lenses when the lenses are inserted into a case or are folded flat against each other. The torsion element provides the spring force to engage the nose with the pad as well as torsion force to restore this orientation when withdrawn from a case thus making the glasses ultra compact and easy to store and carry.

The example shown in Figure 10 may be full size sunglasses having a 62 mm wide optical zone and weighing less than 7 g. The sunglasses may be stored in a flat configuration or in a folded configuration, as described above, in a case with an internal volume less than 10 cm³.

The example of Figure 10 also provides adjustable positions for the bridge 1002 and nose pads 1009 to accommodate a range of nose sizes for a comfortable and secure fit. Superelastic nitinol bridge 1002 is attached to two thin bridge carriers 1003 that can slide on the back surface of the lenses. Plastic or metal rivets 1006 whose heads are trapped by holes on the front of each lens penetrate serrated channels 1005 in the carriers 1003. The rivets are attached to the nose pad carriers 1008 so that as the lenses are pushed toward each other the nose bridge narrows to accommodate narrower noses.

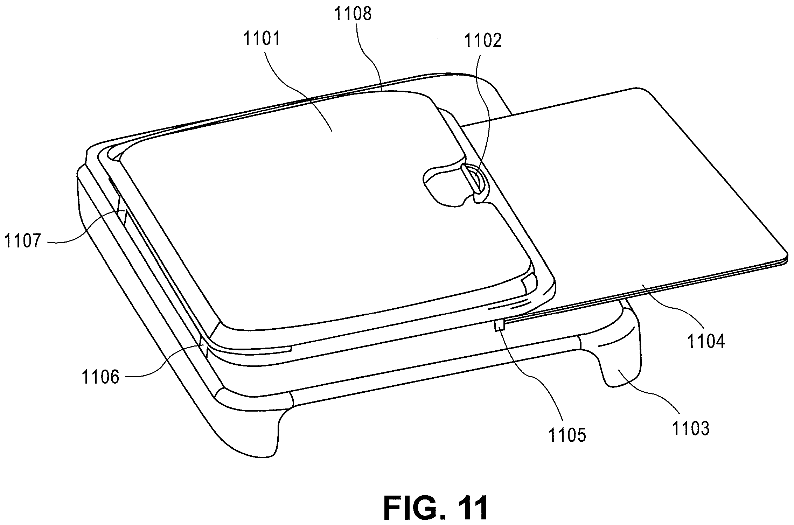

Figure 11 shows yet another embodiment of a flat glasses case 1101 attached to a housing 1103 via elastic connections 1105, 1106, 1107, and 1108. Housing 103 may be designed to attach to a cell phone. Elastic connections 1105-1108 permit the distance between case 1101 and housing 1103 to be increased to allow the user to use the space between the glasses case 1101 and the housing 1103 as a compact wallet carrying money, ID or credit cards 1104.

## Claims

1. An eyewear system comprising eyeglasses (100, 1000) comprising:
first and second lenses (101, 1001);
first and second nose pads (103, 1003), wherein the first and second nose pads each form a cantilever extending from a connector connecting the nose pad to its respective lens, the connector adapted to permit relative movement between the first and second nose pads and the first and second lenses, respectively; and
a bridge (102, 1002) operably connecting the first and second lenses, the bridge being bendable from a bridge rest position to permit relative movement between the first and second nose pads and providing a bridge pinch force of 50 g or less between the nose pads when the nose pads are moved 7 mm or less from the bridge rest position, **characterized in that** the bridge force is a spring force having a spring constant greater than a spring constant of the cantilever of the first nose pad and the second nose pad.

2. The eyewear system of claim 1, wherein the nose pads are adapted to exert less than 150 g/cm² of pressure on a nose of a user when the eyeglasses are mounted on the nose.

3. The eyewear system of claim 1, wherein the nose pads each comprise friction material having a friction coefficient less than 3.5.

4. The eyewear system of claim 1, further comprising a case (202, 301, 801) adapted to receive the eyeglasses, the case and eyeglasses being sized so that the bridge bends from its rest position when the eyeglasses are within the case to provide a retention force between the eyeglasses and the case when the eyeglasses are disposed within the case.

5. The eyewear system of claim 4, wherein the case comprises offset frame guides (803, 804) sized and configured with respect to the eyeglasses to engage and fold the eyeglasses as the eyeglasses are inserted into the case.

6. The eyewear system of claim 4, wherein the case further comprises a locking element (802) adapted to hold the eyeglasses within the case and an opening adapted to receive the eyeglasses, the locking element being disposed to block the opening in a first position and to permit access to the opening in a second position.

7. The eyewear system of claim 6, wherein the case further comprises a rotatable connection adapted to permit the locking element to rotate between the first position and the second position.

8. The eyewear system of claim 6, wherein the case further comprises a keychain connector (806).

9. The eyewear system of claim 8, wherein the keychain connector is disposed on the locking element.

10. The eyewear system of claim 1 wherein the bridge and/or the first and second nose pad connectors are connected to the first and second lenses.

11. The eyewear system of claim 10, wherein the bridge comprises first and second adjustable connectors (1003) adapted to move with respect to the first and second lenses, respectively, to change an effective length of the bridge.

12. The eyewear system of claim 1 wherein the first and second nose pad connectors are adjustable to change a width between the first and second nose pads.

## Patentansprüche

1. Brillensystem, umfassend eine Brille (100, 1000), umfassend:
ein erstes und ein zweites Brillenglas (101, 1001);
ein erstes und ein zweites Nasenpad (103, 1003), wobei das erste und zweite Nasenpad jeweils einen Ausleger bilden, der sich von einem Verbindungsstück erstreckt, das das Nasenpad mit dem entsprechenden Brillenglas verbindet, wobei das Verbindungsstück angepasst ist, um eine relative Bewegung zwischen dem ersten und zweiten Nasenpad bzw. dem ersten und zweiten Brillenglas zuzulassen; und
einen Steg (102, 1002), der das erste und zweite Brillenglas operabel miteinander verbindet, wobei der Steg von einer Stegruheposition verbogen werden kann, um eine relative Bewegung zwischen dem ersten und zweiten Nasenpad zuzulassen und eine Stegkneifkraft von 50 g oder weniger zwischen den Nasenpads bereitzustellen, wenn die Nasenpads 7 mm oder weniger von der Stegruheposition bewegt werden, **dadurch gekennzeichnet, dass** die Stegkraft eine Federkraft mit einer Federkonstante ist, die größer als eine Federkonstante des Auslegers des ersten Nasenpads und des zweiten Nasenpads ist.

2. Brillensystem nach Anspruch 1, wobei die Nasenpads angepasst sind, um weniger als 150 g/cm² Druck auf eine Nase eines Nutzers auszuüben, wenn die Brille auf der Nase sitzt.

3. Brillensystem nach Anspruch 1, wobei die Nasepads jeweils Reibmaterial mit einem Reibungskoeffizienten von weniger als 3,5 umfassen.

4. Brillensystem nach Anspruch 1, ferner umfassend eine Hülle (202, 301, 801), die angepasst ist, um die Brille aufzunehmen, wobei die Hülle und die Brille eine solche Größe haben, dass sich der Steg von seiner Ruheposition verbiegt, wenn die Brille in der Hülle ist, um eine Haltekraft zwischen der Brille und der Hülle bereitzustellen, wenn die Brille in der Hülle angeordnet ist.

5. Brillensystem nach Anspruch 4, wobei die Hülle versetzte Rahmenführungen (803, 804) umfasst, die in Bezug auf die Brille eine solche Größe haben und so konfiguriert sind, dass sie mit der Brille in Eingriff kommen und diese falten, wenn die Brille in die Hülle eingeführt wird.

6. Brillensystem nach Anspruch 4, wobei die Hülle ferner ein Verriegelungselement (802), das angepasst ist, um die Brille in der Hülle zu halten, und eine Öffnung umfasst, die angepasst ist, um die Brille aufzunehmen, wobei das Verriegelungselement angeordnet ist, um die Öffnung in einer ersten Position zu blockieren und um einen Zugriff auf die Öffnung in einer zweiten Position zuzulassen.

7. Brillensystem nach Anspruch 6, wobei die Hülle ferner eine drehbare Verbindung umfasst, die angepasst ist, um zuzulassen, dass sich das Verriegelungselement zwischen der ersten Position und der zweiten Position dreht.

8. Brillensystem nach Anspruch 6, wobei die Hülle ferner ein Verbindungsstück für einen Schlüsselanhänger (806) umfasst.

9. Brillensystem nach Anspruch 8, wobei das Verbindungsstück für einen Schlüsselanhänger an dem Verriegelungselement angeordnet ist.

10. Brillensystem nach Anspruch 1, wobei der Steg und/oder das erste und zweite Nasenpad-Verbindungsstück mit dem ersten und zweiten Brillenglas verbunden sind.

11. Brillensystem nach Anspruch 10, wobei der Steg ein erstes und zweites anpassbares Verbindungsstück (1003) umfasst, die angepasst sind, um sich in Bezug auf das erste bzw. zweite Brillenglas zu bewegen, um eine effektive Länge des Stegs zu verändern.

12. Brillensystem nach Anspruch 1, wobei das erste und zweite Nasenpad-Verbindungsstück angepasst werden können, um eine Breite zwischen dem ersten und zweiten Nasenpad zu verändern.

## Revendications

1. Système de lunettes comprenant des lunettes (100, 1000) comprenant :
des premier et second verres (101, 1001) ;
des première et seconde plaquettes de nez (103, 1003), dans lesquelles les première et seconde plaquettes de nez forment chacune un cantilever s'étendant depuis un connecteur reliant la plaquette de nez à son verre respectif, le connecteur étant adapté pour permettre un mouvement relatif entre les première et seconde plaquettes de nez et les premier et second verres, respectivement ; et
un pont (102, 1002) reliant de manière opérationnelle les premier et second verres, le pont pouvant être plié à partir d'une position de repos du pont pour permettre un mouvement relatif entre les première et seconde plaquettes de nez et fournissant une force de pincement du pont de 50 g ou moins entre les plaquettes de nez lorsque les plaquettes de nez sont déplacées de 7 mm ou moins à partir de la position de repos du pont, **caractérisé en ce que** la force du pont est une force de ressort ayant une constante de ressort supérieure à une constante de ressort du cantilever de la première plaquette de nez et de la seconde plaquette de nez.

2. Système de lunettes selon la revendication 1, dans lequel les plaquettes de nez sont adaptées pour exercer une pression inférieure à 150 g/cm² sur le nez d'un utilisateur lorsque les lunettes sont montées sur le nez.

3. Système de lunettes selon la revendication 1, dans lequel les plaquettes de nez comprennent chacune un matériau de friction ayant un coefficient de friction inférieur à 3,5.

4. Système de lunettes selon la revendication 1, comprenant en outre un étui (202, 301, 801) adapté pour recevoir les lunettes, l'étui et les lunettes étant dimensionnés de sorte que le pont se plie à partir de sa position de repos lorsque les lunettes sont à l'intérieur de l'étui pour fournir une force de rétention entre les lunettes et l'étui lorsque les lunettes sont disposées à l'intérieur de l'étui.

5. Système de lunettes de la revendication 4, dans lequel l'étui comprend des guides de monture décalés (803, 804) dimensionnés et configurés par rapport aux lunettes pour engager et plier les lunettes lorsque les lunettes sont insérées dans l'étui.

6. Système de lunettes selon la revendication 4, dans lequel l'étui comprend en outre un élément de verrouillage (802) adapté pour maintenir les lunettes à l'intérieur du boîtier et une ouverture adaptée pour recevoir les lunettes, l'élément de verrouillage étant disposé pour bloquer l'ouverture dans une première position et pour permettre l'accès à l'ouverture dans une seconde position.

7. Système de lunettes selon la revendication 6, dans lequel l'étui comprend en outre une connexion rotative adaptée pour permettre à l'élément de verrouillage de tourner entre la première position et la seconde position.

8. Système de lunettes selon la revendication 6, dans lequel l'étui comprend en outre un connecteur de porte-clés (806).

9. Système de lunettes selon la revendication 8, dans lequel le connecteur du porte-clés est disposé sur l'élément de verrouillage.

10. Système de lunettes selon la revendication 1, dans lequel le pont et/ou les premier et second connecteurs de plaquette de nez sont reliés aux premier et second verres.

11. Système de lunettes selon la revendication 10, dans lequel le pont comprend des premier et second connecteurs réglables (1003) adaptés pour se déplacer par rapport aux premier et second verres, respectivement, pour changer une longueur effective du pont.

12. Système de lunettes selon la revendication 1, dans lequel les premier et second connecteurs de plaquettes de nez sont réglables pour modifier la largeur entre les première et seconde plaquettes de nez.
